# EUROPÄISCHE PATENTANMELDUNG

(11) **EP 3 868 503 A1**
(43) Veröffentlichungstag der Anmeldung: **25.08.2021**
(21) Anmeldenummer: 21000052.7
(22) Anmeldetag: 18.02.2021
(51) Int. Cl.: B23B 31/177

(54) **SPANNFUTTER MIT HOHER SPANNWIEDERHOLGENAUIGKEIT**

(30) Priorität: 18.02.2020 DE 102020001039
(71) Anmelder: Steinberger, Josef, 40231 Düsseldorf (DE); Stolzenberg, Hans, 41325 Korschenbroich (DE); Strathmann, Heinz-Josef, 41352 Korschenbroich (DE)
(72) Erfinder: Steinberger, Josef, 40231 Düsseldorf (DE); Stolzenberg, Hans, 41325 Korschenbroich (DE); Strathmann, Heinz-Josef, 41352 Korschenbroich (DE)
(74) Vertreter: Demski, Siegfried

(57) **Zusammenfassung**

Die Erfindung betrifft ein Spannfutter (1) für Dreh-, Schleif- oder Fräsbänke, umfassend zumindest einen Futterkörper (2) mit wenigstens zwei Spannbacken (3, 4, 5) und einer Spannbackenführung (6, 7, 8), wobei die Spannbacken (3, 4, 5) über ein Betätigungselement (9, 10, 11) verstellbar sind. Um eine hohe Spannwiederholgenauigkeit zu erzielen ist erfindungsgemäß vorgesehen, dass das Betätigungselement (9, 10, 11) gegenüber einer ersten Anlagefläche (18, 19, 20) und einer zweiten Anlagefläche (21, 22, 23) des Futterkörpers (2), welche in einem Winkel zueinander angeordnet sind und in einem Berührungspunkt (P) zusammenlaufen, abgestützt ist. Durch die Anlage des Betätigungselementes (9, 10, 11) an eine erste Anlagefläche (18, 19, 20) und eine zweite Anlagefläche (21, 22, 23) im Futterkörper (2) wird eine wiederholbare Position des Betätigungselementes (9, 10, 11) innerhalb des Futterkörpers (2) eingenommen, sodass das gewünschte Ergebnis einer hohen Spannwiederholgenauigkeit erzielt wird.

## Beschreibung

Die Erfindung betrifft ein Spannfutter für Dreh-, Schleif- oder Fräsbänke, umfassend zumindest einen Futterkörper mit wenigstens zwei Spannbacken und jeweils einer zugehörigen Spannbackenführung, wobei die Spannbacken über ein axiales Betätigungselement verstellbar sind.

Zur Bearbeitung von Werkstücken durch Drehen, Schleifen und Fräsen werden Spannvorrichtungen benötigt, um die Werkstücke sicher einzuspannen und zu halten. Fräsmaschinen werden hierbei hauptsächlich für Fräs- und Bohrarbeiten eingesetzt, während in Drehzentren vorzugsweise Drehbänke zur Bearbeitung von runden Werkstücken eingesetzt werden. Speziell zum Drehen von Werkstücken werden Spannfutter mit hoher Spannwiederholgenauigkeit benötigt. Nur mit einer entsprechenden Spannwiederholgenauigkeit können hochpräzise Werkstücke gefertigt werden.

Aus dem Stand der Technik sind hierzu Keilhakenfutter bekannt, bei dem der Kolben im Futterkörper schwimmend gelagert ist. Diese Keilhakenfutter weisen ein Fügespiel auf, sodass die zentrische Lage des eingespannten Werkstückes beim Umspannen nicht exakt erreicht werden kann.

Die Aufgabe eines Spannwerkzeuges besteht darin ein Werkstück in einer bestimmten Lage so mit der Werkzeugmaschine zu verbinden, dass die gewünschte Werkstückachse mit der tatsächlich gegebenen Spindelachse fluchtet. Der am Werkstück entstehende Gesamtrundlauffehler setzt sich hierbei aus mehreren Einzelfehlern zusammen, welche zum Teil vom Spannfutter stammen. Das meistverwendete Futtersystem ist das sogenannte Keilspannfutter. Geht man davon aus, dass auf einem Spannfutter fehlerfreie Aufsatzbacken befestigt sind, so entspricht der gemessene Rundlauffehler dem Fehler des Spannfutters von der Aufnahme der Aufsatzbacke zur Aufnahme des Spannfutters auf der Spindelseite. Die Aufsatzbacke hat unter dieser Annahme keinen Einfluss auf den Rundlauffehler und kann deshalb außer Betracht bleiben. Abweichungen, die den Rundlauffehler beeinflussen entstehen durch einen radialen Mittenversatz, wobei es sich um die Abweichungen senkrecht zur Backenführung handelt, sodass somit der Mittelpunkt der Spannbacken außerhalb der Futtermitte liegt. Die Größe dieser Exzentrizität ist von der Richtung und Größe des radialen Versatzes der einzelnen Spannbacken abhängig.

Ein weiterer Fehler wird durch den Planschlag beeinflusst. Soll der Planschlag den Wert null erreichen, so müssen die Anlageflächen der Aufsatzbacken, ausgehend von einer fehlerfreien Spannbacke in einer Ebene liegen, die parallel zur Planfläche des Futters liegt. Durch die Einzelfehler am Futterkörper und den Grundbacken ist diese Forderung kaum zu erfüllen. Hierbei spielen die Einzelfehler des Futterköpers als auch der Grundbacken eine wesentliche Rolle, welche sich aufaddieren. Die auftretenden Fehler können hierbei Abweichungen für einen radialen Mittenversatz von ca. 70 bis 100 µm betragen.

Mit einem Keilhakenfutter besteht daher keine absolute Rundlaufgenauigkeit und zudem wird beim Umspannen der Werkstücke, soweit diese von beiden Seiten bearbeitet werden müssen, aufgrund des vorhandenen Spiels der Klemmbacken keine exakte Zentrierung zur Axialachse erreicht. Bei einem Dreibackenfutter addieren sich die einzelnen Toleranzen zudem auf. Die Folgen davon sind Bearbeitungsfehler auf den äußeren Oberflächen, insbesondere wenn diese während der Fertigung gedreht werden müssen.

Zur Erzielung einer höheren Spannwiederholgenauigkeit mit einer exakten Zentrierung ist es daher notwendig ein Spannfutter einzusetzen, welches nicht nur eine geringe Fehlertoleranz aufweist, sondern auch eine hohe Spannwiederholgenauigkeit besitzt.

Aus der deutschen Patentschrift 365 241 Ist eine Zentriervorrichtung bekannt, welche tangential liegende Betätigungselemente in Form von Zahnstangen aufweist, wobei die Zahnstangen synchron über ein Ritzel bewegt werden, um eine Verspannung herbeizuführen. Die Bewegung der Zahnstangen wird auf die Spannbacken übertragen.

Aus der DE 1 922 499 ist ein Backenfutter mit auswechselbaren Aufsatzbacken bekannt. Hierbei steht im Vordergrund, dass die Grundbacke mit mehreren wahlweise zu benutzenden Anlageflächen für unterschiedlich ausgebildete Aufsatzbacken ausgestattet ist.

Der vorliegenden Erfindung liegt die Aufgabe zugrunde ein neuartiges Spannfutter aufzuzeigen, welches geringe Fehler besitzt und eine hohe Spannwiederholgenauigkeit aufweist.

Erfindungsgemäß ist zur Lösung der Aufgabe vorgesehen, dass das Betätigungselement für jede Spannbacke axial beweglich angeordnet ist und gegenüber einer ersten Anlagefläche und einer zweiten Anlagefläche des Futterkörpers abgestützt ist, welche in einem Winkel zueinander angeordnet sind, in einem Berührungspunkt (P) zusammenlaufen und senkrecht zum Futterkörper ausgerichtet sind. Weitere vorteilhafte Ausgestaltungen der Erfindung ergeben sich aus den Unteransprüchen.

Der Grundaufbau der Spannfutter ähnelt sich sehr stark, und zwar bestehen diese aus einem Futterkörper in denen Gleitführungen vorhanden sind, die zur Aufnahme der Spannbacken verwendet werden. Es können Spannfutter mit zwei oder mehreren Spannbacken eingesetzt werden, wobei vorzugsweise drei oder vier Spannbacken zum Einsatz kommen. Die Bewegung der Spannbacken erfolgt hierbei über ein Betätigungselement, welches in Axialrichtung bewegbar ist und die Verstellung der Spannbacken in Radialrichtung zum Zentrum oder vom Zentrum weg ermöglicht. Das neue Spannfutter zeichnet sich hierbei dadurch aus, dass das Betätigungselement zumindest an zwei Anlageflächen im Futterkörper anliegt. Die beiden Anlageflächen sind orthogonal ausgerichtet und bilden einen Berührungspunkt P. Die hierbei festgelegte Position ist unverrückbar durch den Futterkörper festgelegt und damit zur Drehmitte der Maschine fixiert, sodass sich bei jedem Spannvorgang das Betätigungselement immer wieder in der gleichen Position befindet. Hierbei drückt die jeweilige Spannbacke das Betätigungselement gegen die beiden Anlageflächen, sodass das Betätigungselement, beispielsweise ein Ziehkolben zum Berührungspunkt P und damit zur Anlage an die beiden Anlageflächen gedrückt wird. Als Widerlage der Spannbacken dient die Gleitfläche in der Führung des Spannkörpers.

Durch Beaufschlagung des Betätigungselementes durch eine Axialkraft werden die Spannbacken innerhalb der Führung des Futterkörpers gegen eine Gleitfläche, die dem Betätigungselement gegenüberliegt und das Betätigungselement in den Berührungspunkt P gedrückt und nehmen bei jedem Spannvorgang die gleiche Position ein. Hierbei wird die Position durch die zumindest eine Gleitfläche im Futterkörper und die Anlagefläche für das Betätigungselement festgelegt, welche im Futterkörper eine Bezugsgröße definieren, die nicht veränderlich ist. Die hierbei festgelegte Position ist ebenso unverrückbar mit der Maschine zur Drehmitte fixiert, sodass sich bei jedem Spannvorgang die Spannbacke immer wieder in der gleichen Position befindet. Hierbei wird die aufgebrachte Axialkraft für die Bewegung des Betätigungselementes über einen Winkel (W₁) in eine Radialkraft (Fᵣ) und über einen zweiten Winkel (W₂) in eine tangentiale Kraft (Fₜ) übertragen, welche die Spannbacke ausgehend von dem Betätigungselement gegen die Anlagefläche im Futterkörper drückt und das Werkstück einspannt. Hierdurch liegt das Betätigungselement an zumindest einer, vorzugsweise zwei Anlageflächen spielfrei an und durch die Gegenkräfte liegt die Spannbacke an einer Gleitfläche im Futterkörper spielfrei an. Die beweglichen Glieder des Spannfutters werden am Anfang des Zentriervorganges immer in die gleiche Position gedrückt und sind somit quasi als spielfrei zu betrachten. Hierdurch haben die beweglichen Teile eine definierte wiederholbare Anfangsposition, wodurch eine außerordentlich hohe Spannwiederholgenauigkeit erzielt wird.

Vorzugsweise wird hierbei das Betätigungselement gegenüber zwei rechtwinklig angeordneten Anlageflächen in einem Berührungspunkt (P) abgestützt. Durch die beiden Anlageflächen wird die Position des Betätigungselementes innerhalb des Futterkörpers vorgegeben und dient bei jedem Spannvorgang als Referenzpunkt. Hierdurch besteht somit die Möglichkeit, die zu bearbeitenden Werkstücke zunächst an einem Ende zu bearbeiten und nach der Entnahme aus dem Spannfutter zu drehen und erneut einzuspannen, um das zweite Ende ebenfalls zu bearbeiten. Aufgrund der Fixierung des Betätigungselementes und der Spannbacke in der Spannbackenführung kann das Werkstück in vorteilhafter Weise mit einer identischen Mittenposition erneut eingespannt werden.

Das Betätigungselement weist zumindest einen, oder gegebenenfalls mehrere Zähne auf, welche den Anpressdruck auf die Spannbacken übertragen. Soweit das Betätigungselement mit einem oder mehreren Zähnen in die Spannbacke eingreift wird das Betätigungselement durch die Anlageflächen immer wieder in die gleiche Position gedrückt mit der Wirkung, dass die Spannbacke gegen eine gegenüber dem Betätigungselement liegende Gleitfläche der Spannbackenführung angedrückt werden, wodurch die Spannbacke spielfrei innerhalb der Spannbackenführung gehalten wird.

Die hierdurch erzielbare Genauigkeit ist kleiner als 10 µ. Diese hohe Genauigkeit wird durch die Anlagefläche für das Betätigungselement und den Anpressdruck der Spannbacke an die Gleitfläche erzielt, sodass immer wieder der gleiche Abstand der Spannbacken zum Mittelpunkt des Spannfutters erreicht wird. Die bisher üblichen Rundlauffehler können somit deutlich verringert werden, weil der auftretende Fehler zwischen Betätigungselement und Spannbacke deutlich reduziert ist.

Vorzugsweise wird für die Zahnform des Betätigungselementes eine Trapezform gewählt, welche die Möglichkeit bietet, die axiale Zugkraft eines Kolbens über die Betätigungselemente in eine radiale Andruckkraft auf das Werkstück umzusetzen. Hierzu weist die Spannbacke eine zur Trapezform des Betätigungselementes korrespondierende Nut auf, wodurch die Bewegung der Spannbacken in beiden Richtungen möglich wird.

In Ausgestaltung der Erfindung ist hierbei vorgesehen, dass aus der anliegenden Zugkraft (Fₐₓ) eines Kolbens die Betätigungselemente beaufschlagbar sind und über einen ersten Winkel (W₁) eine Radialkraft (Fᵣ) entsteht, wobei der Winkel (W₁) durch die Trapezform mit Keilflächen des Betätigungselementes vorgegeben ist und dass aus der Radialkraft (Fᵣ) durch den Winkel (W₂) eine tangentiale Kraft (Fₜ) auf die Spannbacken entsteht, wobei der Winkel (W₂) durch die Trapezform der Zähne vorgegeben ist. Üblicherweise bestehen die Spannbacken hierbei aus einer Grundbacke und einer Aufsatzbacke, wobei die Aufsatzbacke gegenüber der Grundbacke radial verstellbar ist, um verschiedene Werkstücke aufzunehmen.

Ferner liegt der Erfindung die Verfahrensaufgabe zugrunde, ein Spannfutter mit hoher Spannwiederholungsgenauigkeit herzustellen.

Zur Lösung der Verfahrensaufgabe ist zur Herstellung eines Spannfutters mit hoher Spannwiederholungsgenauigkeit, bestehend aus einem Futterkörper mit wenigstens zwei Spannbacken und einem Betätigungselement zur Beaufschlagung der Spannbacken mit einem Spanndruck vorgesehen, dass zunächst das Erzeugen eines Spanndruckes durch Anlage der Betätigungselemente gegen eine erste Anlagefläche und eine zweite Anlagefläche des Futterkörpers und einer Kraftübertragung auf die Spannbacken erfolgt und im Anschluss die Spannbacken des Spannfutters unter bestehendem Spanndruck ausgedreht werden.

Das Ausdrehen der Spannbacken unter Spanndruck erfolgt beispielsweise durch die Verwendung eines äußeren Feststellringes, welcher die Spannbacken fixiert. Nach erfolgter Fixierung der Spannbacken erfolgt die Ausdrehung der eigentlichen Spannflächen der Spannbacken, sodass die Spannbacken bei jedem erneuten Verspannen eine gleichmäßige Andruckfläche an das Werkstück besitzen.

Durch das Ausdrehen der Spannflächen unter Spanndruck wird die absolute Rundlaufgenauigkeit erreicht, weil die Summenfehler aus der Fertigung der Einzelteile durch diese Maßnahme beseitigt werden. Das Betätigungselement wird hierbei durch die Spannbacken zur Anlage an eine erste und zweite Anlagefläche gedrückt, welche in einem Winkel zueinander ausgerichtet sind und in einem Berührungspunkt P zusammenlaufen, wobei die erste und zweite Anlagefläche senkrecht zum Futterkörper ausgerichtet sind. Vorzugsweise ist die erste und zweite Anlagefläche rechtwinklig zueinander ausgerichtet. Die beiden Anlageflächen werden durch den Futterkörper vorgegeben, sodass sich das Betätigungselement und die Spannbacken immer in der gleichen Position befindet. Die Spannbacken nehmen innerhalb des Futterkörpers daher immer dieselbe Position ein. Durch die Ausdrehung der Spannflächen der einzelnen Spannbacken wird zudem eine exakte zentrische Position der Spannflächen zum Mittelpunkt der Maschinenspindel erreicht, sodass neben der Spannwiederholgenauigkeit auch eine absolute Rundlaufgenauigkeit vorliegt. Hierbei wird aus der anliegenden Zugkraft (Fₐₓ) eines Kolbens auf die Betätigungselemente über einen ersten Winkel (W₁) eine Radialkraft (Fᵣ) erzeugt, wobei der Winkel (W₁) durch die Trapezform mit Keilflächen des Betätigungselementes vorgegeben ist und aus der Radialkraft (Fᵣ) durch den Winkel (W₂) eine tangentiale Kraft (Fₜ) erzeugt, wobei der Winkel (W₂) durch die Trapezform der Zähne vorgegeben ist.

Der besondere Vorteil der vorliegenden Erfindung besteht darin, dass das Spannfutter mit zumindest zwei Spannbacken so konstruiert ist, dass das Betätigungselement in Form beispielsweise einer Zugstange durch die Spannbacken gegen zwei feste Anlageflächen des Futterkörpers gedrückt wird. Es handelt sich um zwei in einem Winkel aufeinander stehende Anlageflächen, welche in einem Berührungspunkt P zusammenlaufen, der die radiale und tangentiale Position des Betätigungselementes festlegt. Durch die Verwendung von trapezförmigen Zähnen des Betätigungselementes wird hierbei die aufgebrachte axiale Zugkraft der Betätigungselementes in eine Radial- und Tangentialkraft umgesetzt, die unmittelbar als Spannkraft auf die Spannbacken einwirkt, wobei die Spannbacken gegen eine Gleitfläche gedrückt werden, die dem Betätigungselement gegenüberliegt. Durch den Berührungspunkt P und die Gleitfläche der Spannbacke wird hierbei eine feste Position vorgegeben, welche die Spannbacken immer wieder in eine identische Ausgangsposition drückt, um Werkstücke mit einer hohen Spannwiederholgenauigkeit und Rundlaufgenauigkeit einzuspannen. Die Rundlaufgenauigkeit wird hierbei dadurch erreicht, dass die Spannflächen für das Werkstück unter Spanndruck bearbeitet, beispielsweise ausgedreht werden. Aufgrund der festen Position der Spannbacken innerhalb des Futterkörpers und der ausgedrehten Spannflächen liegt die Position der Spannbacken im Futterkörper fest und ermöglicht die Einspannung der Werkstücke mit der erforderlichen Genauigkeit.

Die Erfindung wird im Weiteren anhand der Figuren näher erläutert.

Es zeigt
- Fig. 1: in einer teilweise geschnittenen Draufsicht ein erfindungsgemäßes Spannfutter und
- Fig. 2: in einer geschnittenen Seitenansicht das aus Figur 1 bekannte Spannfutter.

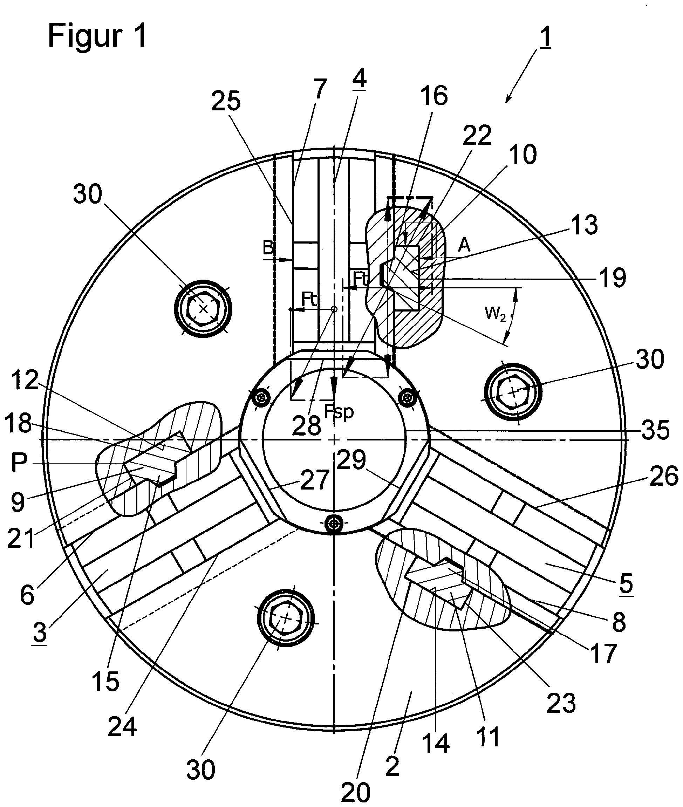

Figur 1 zeigt in einer teilweise geschnittenen Draufsicht ein Spannfutter 1, welches aus einem Futterkörper 2 und drei Spannbacken 3, 4, 5 im gezeigten Ausführungsbeispiel besteht. Von den Spannbacken 3, 4, 5 ist jeweils nur die Grundbacke ersichtlich, auf die im weiteren eine nicht dargestellte Aufsatzbacke befestigt werden kann. Die Befestigung erfolgt hierbei in der Regel durch Schraubbolzen.

Die Spannbacken 3, 4, 5 liegen in einer Spannbackenführung 6, 7, 8 ein, sodass sie in Radialrichtung bewegt werden können. Die Bewegung der Spannbacken 3, 4, 5 erfolgt über ein Betätigungselement 9, 10, 11, welches jeweils einer Spannbacke 3, 4, 5 zugeordnet ist. Die Betätigungselemente 9, 10, 11 ruhen jeweils in einer Ausnehmung 12, 13, 14 des Futterkörpers 2. Im gezeigten Ausführungsbeispiel bestehen die Betätigungselemente 9, 10, 11 aus einer Keilstange, welche nur einen einzelnen Zahn 15, 16, 17 aufweist. Ohne weiteres können die Betätigungselement 9, 10, 11 auch mit mehreren Zähnen 15, 16, 17 versehen sein. Die Form der Zähne 15, 16, 17 ist trapezförmig, wobei die Zähne 15, 16, 17 einstückig mit dem Betätigungselement 9, 10, 11 verbunden sind und in ihrer Trapezform gegenüber dem Grundkörper der Betätigungselemente 9, 10, 11 einen Winkel W₂ aufweisen. Der Winkel W₂ bestimmt die auf die Spannbacken 3, 4, 5 einwirkende Radialkraft Fᵣ, welche zum Andrücken der Spannbacken 3, 4, 5 gegen das nicht dargestellte Werkstück vorgesehen ist.

Die Spannbacken 3, 4, 5, und zwar in diesem Fallen die Grundbacken weisen eine Führung auf, welche mit einer Ausnehmung der Spannbackenführung 6, 7, 8 korrespondiert. Durch die vorhandene Führung wird hierbei verhindert, dass die Spannbacken 3, 4, 5 aus dem Futterkörper 2 herausfallen können und nur eine radiale Bewegung ausführen. Die radiale Bewegung erfolgt durch die Betätigungselemente 9, 10, 11. Die Betätigungselemente 9, 10, 11 sind so gelagert, dass diese aufgrund der entstehenden axialen Zugkraft und der trapezförmigen Form der Zähne 15, 16 ,17 in Verbindung mit den Spannbacken 3, 4, 5 zur Anlage an eine erste Anlagefläche 18, 19, 20 und einer weiteren rechtwinklig hierzu ausgerichteten Anlagefläche 21, 22, 23 gedrückt werden, sodass die Betätigungselemente 9, 10, 11 in einem Berührungspunkt P, welcher durch die Berührung der beiden Anlageflächen 18, 19, 20 und 21, 22, 23 entsteht, fixiert ist. Gleichzeitig wird die Spannbacke 3, 4, 5 gegen eine Gleitfläche 24, 25, 26 der Spannbackenführung 6, 7, 8 gedrückt. Auf diese Weise besitzt sowohl das Betätigungselement 9, 10, 11 als auch die Spannbacken 3, 4, 5 bei jedem Spannvorgang eine feste Position, welche durch die entstehenden Kräfte quasi als spielfrei anzusehen ist. Im vorliegenden Fall werden für die Herstellung des Spannfutters 1 bewegliche Teile mit einem geringen Spiel eingesetzt, um eine hohe Spannwiederholgenauigkeit und Rundlaufgenauigkeit zu erreichen. Die erzielbare Einspanngenauigkeit ist kleiner als 10 µ. Die bisher erzielbare Spannungswiederholgenauigkeit kann auf diese Weise deutlich verringert werden, weil der auftretende Fehler zwischen Betätigungselement 9, 10, 11 und Spannbacke 3, 4, 5 weniger als 5 µ beträgt.

Diese Genauigkeit wird durch die Herstellung der beweglichen Teile und zudem durch die auftretenden Kräfte auf die Betätigungselemente 9, 10, 11 erzielt und führen dazu, dass die Betätigungselemente 9, 10, 11 in einer festen Position im Berührungspunkt P mit Anlage an den zugehörigen Anlagefläche 18, 19, 20 und 21, 22, 23 angedrückt werden, wobei gleichzeitig die Spannbacken 3, 4, 5 gegen eine Gleitfläche 24, 25, 26 gedrückt werden und damit quasi spielfrei sind.

Um eine hohe Rundlaufgenauigkeit zu erzielen werden die Spannbacken 3, 4, 5 unter Spannung zusätzlich mit ihren Spannflächen 27, 28, 29 ausgedreht, sodass die Spannflächen 27, 28, 29 einen identischen Abstand zum Zentrum des Spannfutters 1 bei jedem Spannvorgang aufweisen.

Die aus der Draufsicht entnehmbaren Schraubbolzen 30, welche in einer Bohrung des Futterkörpers 2 aufgenommen sind, dienen zur Verschraubung des Spannfutters 1 mit einem Teil der Fertigungsmaschine.

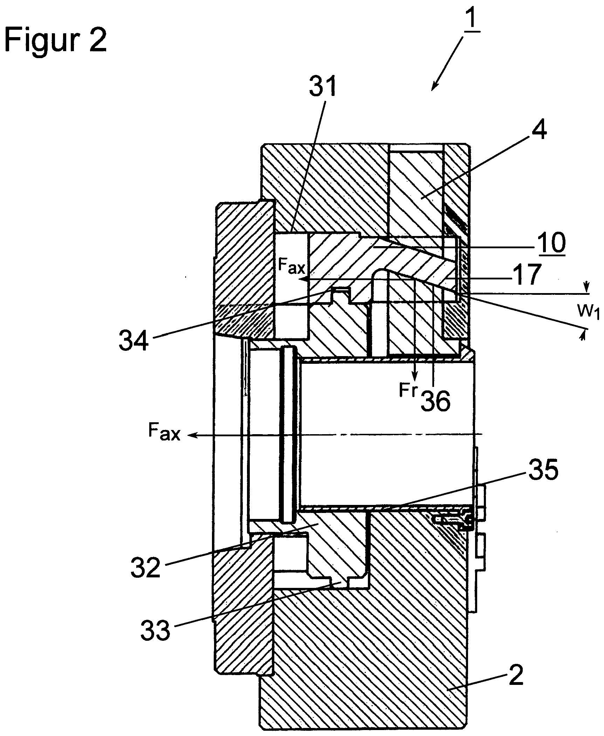

Figur 2 zeigt in einer geschnittenen Seitenansicht das Spannfutter 1. Der Futterkörper 2 nimmt hierbei die Spannbacken 3, 4, 5 auf, wobei diese um jeweils 120 Grad zueinander versetzt angeordnet sind, sodass aus dieser Ansicht nur die Spannbacke 4 ersichtlich ist. Das Betätigungselement 10 liegt in einer Axialbohrung 31 des Futterkörpers 2 ein und weist die Verzahnung 17 auf. Das Betätigungselement 10 in Form einer Keilstange greift in die vorhandene Nut 36 der Spannbacke 4 ein, wobei der Verlauf des Zahnes 17 unter einem Winkel W₁ zur Axialrichtung der Spannfutters 1 verläuft. Über den Winkel W₁ wird die aufgebrachte Zugkraft (Fₐₓ) auf das Betätigungselement 10 in eine Radialkraft (Fᵣ) übertragen, welche über den weiteren Winkel W₂ die erforderliche Radialkraft (Fᵣ) der einzelnen Spannbacken erzeugt. Die Axialkraft (Fₐₓ) wird durch einen ringförmigen Körper 32 mit entsprechenden Zugmitteln in Form eines Kolbens aufgebracht, wobei die Übertragung der Axialkraft (Fₐₓ) auf das Betätigungselement 10 beziehungsweise die weiteren Betätigungselemente 9, 11 über einen ringförmigen Flansch 33 erfolgt. Der ringförmige Flansch 33 greift hierbei in eine Nut 34 der jeweiligen Betätigungselement 9, 10, 11 ein und bewirkt, dass die Betätigungselement 9, 10, 11 in Axialrichtung bewegt werden. Eine Innenhülse 35 verhindert das Eintreten von Schmutzpartikeln in das Spannfutter 1.

### Bezugszeichenliste

- 1: Spannfutter
- 2: Futterkörper
- 3: Spannbacke
- 4: Spannbacke
- 5: Spannbacke
- 6: Spannbackenführung
- 7: Spannbackenführung
- 8: Spannbackenführung
- 9: Betätigungselement
- 10: Betätigungselement
- 11: Betätigungselement
- 12: Ausnehmung
- 13: Ausnehmung
- 14: Ausnehmung
- 15: Zahn
- 16: Zahn
- 17: Zahn
- 18: Anlagefläche
- 19: Anlagefläche
- 20: Anlagefläche
- 21: Anlagefläche
- 22: Anlagefläche
- 23: Anlagefläche
- 24: Gleitfläche
- 25: Gleitfläche
- 26: Gleitfläche
- 27: Spannfläche
- 28: Spannfläche
- 29: Spannfläche
- 30: Schraubbolzen
- 31: Axialbohrung
- 32: Körper
- 33: Flansch
- 34: Nut
- 35: Innenhülse
- 36: Nut

## Patentansprüche

1. Spannfutter (1) für Dreh-, Schleif- oder Fräsbänke, umfassend zumindest einen Futterkörper (2) mit wenigstens zwei Spannbacken (3, 4, 5) und jeweils einer zugehörigen Spannbackenführung (6, 7, 8), wobei die Spannbacken (3, 4, 5) über ein Betätigungselement (9, 10, 11) verstellbar sind,
**dadurch gekennzeichnet,**
**dass** das Betätigungselement (9, 10, 11) für jede Spannbacke (3, 4, 5) axial beweglich angeordnet ist und gegenüber einer ersten Anlagefläche (18, 19, 20) und einer zweiten Anlagefläche (21, 22, 23) des Futterkörpers (2) abgestützt ist, welche in einem Winkel zueinander angeordnet sind, in einem Berührungspunkt (P) zusammenlaufen und senkrecht zum Futterkörper ausgerichtet sind.

2. Spannfutter (1) nach Anspruch 1,
**dadurch gekennzeichnet,**
**dass** die Spannbacken (3, 4, 5) das Betätigungselement (9, 10, 11) gegen die Anlageflächen (18, 19, 20, 21, 22, 23) drückt und als Widerlager an einer dem Berührungspunkt (P) gegenüberliegende Gleitfläche (24, 25, 26) der Führung des Futterkörpers (2) anliegt.

3. Spannfutter (1) nach Anspruch 1 oder 2,
**dadurch gekennzeichnet,**
**dass** das Betätigungselement (9, 10, 11) einen oder mehrere Zähne (15, 16, 17) aufweist, welche den Anpressdruck auf die Spannbacken (3, 4, 5) übertragen.

4. Spannfutter (1) nach einem der Ansprüche 1, 2 oder 3,
**dadurch gekennzeichnet,**
**dass** die Zähne (15, 16, 17) eine Trapezform aufweisen.

5. Spannfutter (1) nach einem der Ansprüche 1 bis 4,
**dadurch gekennzeichnet,**
**dass** die Spannbacken (3, 4, 5) eine zur Trapezform des Betätigungselementes (9, 10, 11) korrespondierende Nut (34) aufweisen.

6. Spannfutter (1) nach einem der Ansprüche 1 bis 5,
**dadurch gekennzeichnet,**
**dass** aus der anliegenden Zugkraft (Fₐₓ) eines Kolbens (32) die Betätigungselemente (9, 10, 11) beaufschlagbar sind und über einen ersten Winkel (W₁) eine Radialkraft (Fᵣ) auf die Spannbacken (3, 4, 5) entsteht, wobei der Winkel (W₁) durch die Trapezform mit Keilflächen des Betätigungselementes (9, 10, 11) vorgegeben ist.

7. Spannfutter (1) nach einem der Ansprüche 1 bis 6,
**dadurch gekennzeichnet,**
**dass** aus der Radialkraft (Fᵣ) durch den Winkel (W₂) eine tangentiale Kraft (Fₜ) auf die Spannbacken (2, 3, 4) entsteht, wobei der Winkel (W₂) durch die Trapezform der Zähne (15, 16, 17) vorgegeben ist.

8. Spannfutter (1) nach einem der Ansprüche 1 bis 7,
**dadurch gekennzeichnet,**
**dass** das Spannfutter (1) mit mehr als zwei Spannbacken (3, 4, 5) ausgestattet ist, und/oder dass die Spannbacken (3, 4, 5) aus einer Grundbacke und einer Aufsatzbacke bestehen.

9. Verfahren zur Herstellung eines Spannfutters (1) mit hoher Spannwiederholungsgenauigkeit, bestehend aus einem Futterkörper (2) mit wenigstens zwei Spannbacken (3, 4, 5) und einem Betätigungselement (9, 10, 11) zur Beaufschlagung der Spannbacken (3, 4, 5) mit einem Spanndruck,
**gekennzeichnet durch**
- Erzeugen eines Spanndruckes durch Anlage der Betätigungselemente (9, 10, 11) gegen eine erste Anlagefläche (18, 19, 20) und eine zweite Anlagefläche (21, 22, 23) des Futterkörpers (2) und einer Kraftübertragung auf die Spannbacken (3, 4, 5)
- Ausdrehen der Spannbacken (3, 4, 5) des Spannfutters (1) unter bestehendem Spanndruck.

10. Verfahren nach Anspruch 9,
**dadurch gekennzeichnet,**
**dass** das axiale Betätigungselement (9, 10, 11) die Spannbacken (3, 4, 5) zum Ausdrehen gegen eine erste Anlagefläche (18, 19, 20) und eine zweite Anlagefläche (21, 22, 23) des Futterkörpers (2) drückt, welche in einem Winkel zueinander ausgerichtet sind, in einem Berührungspunkt (P) zusammenlaufen und senkrecht zum Futterkörper ausgerichtet sind.

11. Verfahren nach Anspruch 9 oder 10,
**dadurch gekennzeichnet,**
**dass** aus der anliegenden Zugkraft (Fₐₓ) des Betätigungselementes (9, 10, 11) über einen ersten Winkel (W₁) eine Radialkraft (Fᵣ) erzeugt wird, wobei der Winkel (W₁) durch die Keilfläche des Betätigungselementes (9, 10, 11) vorgegeben ist.

12. Verfahren nach Anspruch 9, 10 oder 11,
**dadurch gekennzeichnet,**
**dass** aus Radialkraft (Fᵣ) durch den Winkel (W₂) eine tangentiale Kraft (Fₜ) erzeugt wird, wobei der Winkel (W₂) durch die Trapezform der Zähne (15, 16, 17) vorgegeben ist.
